# EUROPÄISCHE PATENTANMELDUNG

(11) **EP 1 722 203 A2**
(43) Veröffentlichungstag der Anmeldung: **15.11.2006**
(21) Anmeldenummer: 06007675.9
(22) Anmeldetag: 12.04.2006
(51) Int. Cl.: G01F 23/26

(54) **Messsystem zur Messung des Füllstandes einer sich in einem Behälter befindlichen Flüssigkeit**

(30) Priorität: 13.05.2005 DE 102005022933
(71) Anmelder: Joma-Polytec Kunststofftechnik GmbH, 72407 Bodelshausen (DE); Bayerische Motoren Werke Aktiengesellschaft, 80809 München (DE); Liebherr-Mischtechnik GmbH, 88427 Bad Schussenried (DE)
(72) Erfinder: Wimmer, Rudolf, 4431 Haidershofe (AT); Maute, Alexander, 72379 Hechingen-Stetten (DE); Frey, Werner, 88422 Oggelshausen (DE)
(74) Vertreter: Bulling, Alexander

(57) **Zusammenfassung**

Die Erfindung betrifft ein Messsystem zur Messung des Füllstandes eines mit einer Flüssigkeit befüllbaren Behälters, wobei der Behälter einen Boden und eine um den Boden umlaufende Wandungen aufweist. Die Erfindung kennzeichnet sich dadurch, dass mehrere zur Anordnung an die Wandung und sich dort vom Boden oder von Bodennähe nach oben erstreckende Sensorflächen zur Messung des lokalen Flüssigkeitsstandes an der jeweiligen Sensorfläche vorgesehen sind und dass eine Auswerteeinheit zur Auswertung der Messsignale der einzelnen Sensorflächen und zur Bestimmung des Füllstandes aus den Messsignalen der einzelnen Sensorflächen vorgesehen ist. Die Erfindung betrifft außerdem einen Fahrzeugflüssigkeitsbehälter.

## Beschreibung

Die Erfindung betrifft ein Messsystem zur Messung des Füllstandes eines mit einer Flüssigkeit befüllbaren Behälters, wobei der Behälter einen Boden und eine um den Boden umlaufende Wandung aufweist.

Aus dem Stand der Technik sind derartige Messsysteme in vielfältiger Art und Weise bekannt. Insbesondere sind Messsysteme bekannt, die als Signalgeber einen auf der Flüssigkeitsoberfläche schwimmenden Schwimmer umfassen. Derartige Messsysteme haben allerdings den Nachteil, dass sie bei sich in bewegten Maschinen und insbesondere in Fahrzeugen befindlichen Behältern nur zu einer vergleichsweise ungenauen Messung führen. Die Schwimmerlage ist dabei lageabhängig vom Fahrzeug. Bei Landfahrzeugen, und insbesondere Kraftfahrzeugen, ergeben sich beispielsweise bei Berg-, Tal- oder Kurvenfahrten verschiedene Messergebnisse. Entsprechendes gilt für Wasser- oder Luftfahrzeuge.

Der vorliegenden Erfindung liegt deshalb die Aufgabe zugrunde, ein Messsystem der eingangs beschriebenen Art vorzuschlagen, dass eine funktionssichere und genaue Messung des Füllstandes einer sich in einem Behälter befindlichen Flüssigkeit durchführen kann. Das Messsystem soll zudem im Behältnis möglichst keinen oder nur einen sehr geringen Bauraum einnehmen. Insbesondere soll das Behältnis bis zur Oberkante gefüllt werden können, ohne dass Bauraum für beispielsweise einen Schwimmer zur Verfügung zu stellen ist.

Diese Aufgabe wird durch ein Messsystem der eingangs genannten Art dadurch gelöst, dass mehrere zur Anordnung an die Wandung und sich dort vom Boden oder von Bodennähe nach oben erstreckende Sensorflächen zur Messung des lokalen Flüssigkeitsstandes an der jeweiligen Sensorfläche vorgesehen sind und dass eine Auswerteeinheit zur Auswertung der Messsignale der einzelnen Sensorflächen und zur Bestimmung des Füllstandes aus den Messsignalen der einzelnen Sensorflächen vorgesehen ist.

Ein derartiges Messsystem hat den Vorteil, dass es an mehreren, beispielsweise zwei, drei oder vier Bereichen der Wandung, nämlich dort wo die Sensorflächen vorgesehen sind, den jeweils lokalen Flüssigkeitsstand misst. Über die Auswerteeinheit können dann die Messsignale der einzelnen Sensorflächen ausgewertet werden und es kann der tatsächliche Füllstand bestimmt bzw. berechnet werden. Ein Schwimmer, wie er aus dem Stand der Technik vorbekannt ist, ist nicht vorzusehen. Insbesondere ist kein Bauraum oberhalb der Flüssigkeitsoberfläche für den Schwimmer vorzusehen. Zudem sind keine störanfälligen, bewegten Teile vorzusehen. Die Sensorflächen können sich dabei insbesondere vom Boden bis zur einer oberen Kante der Wandung erstrecken. Damit kann der Füllstand des Behälters von vollständig leer bis vollständig voll erfasst werden. Ferner kann eine Überflutung des Behälters festgestellt werden.

Bei einer vorteilhaften Ausgestaltung der Erfindung ist die Auswerteeinheit derart ausgebildet, dass sie den Füllstand durch Mittelung der einzelnen Messsignale bestimmt. Die Mittelung kann dabei eine Gewichtung umfassen, die in Abhängigkeit von der geometrischen Lage der Sensorflächen zu erfolgen hat. Zudem können die einzelnen Messsignale über einen bestimmten Zeitraum gemittelt werden, um Messungenauigkeiten aufgrund von Wellenbewegungen beziehungsweise Turbulenzen auf der Oberfläche der Flüssigkeit auszuschalten. Zudem kann beispielsweise ein mathematisches Dynamikmodel hinterlegt sein, aus dem anhand der Messsignale der jeweilige Füllstand bestimmt werden kann.

Gemäß einer vorteilhaften Ausgestaltung der Erfindung sind die Sensorflächen folienartig ausgebildet und an die Geometrie der Wandung angepasst oder anpassbar. Durch die folienartige Ausbildung können die Sensorflächen in idealer Weise der Geometrie der Wandung folgen.

Bei einer bevorzugten Ausführungsform der Erfindung sind die Sensorflächen als Streufeldkondensatoren ausgebildet. Mit dem Füllstand der Flüssigkeit steigt auch die elektrische Kapazität des Streufeldkondensators, da dann mehr Flüssigkeit - (εᵣ~2.80) und weniger Gasdielektrikum (εᵣ~1) zwischen den Kondensatorpolen wirksam wird, wodurch sich aufgrund dem unterschiedlichen Dipolmoment der Moleküle verschiedene Messsignale ergeben. Dabei können die Streufeldkondensatoren aus flexiblen, nebeneinander angeordneten und/oder streifenartigen Leiterbahnen gebildet sein. Ein derart realisierter Streufeldkondensator kann auf einfache Art und Weise hergestellt werden und weist die gewünschten Eigenschaften zur Bestimmung des Flüssigkeitsstandes am jeweiligen Streufeldkondensator auf. Die Streufeldkondensatoren können jeweils mit Hilfe eines Kondensatorpols ein elektrisches Wechselfeld gegen ein Bezugspotential insbesondere Erdpotential aufbauen. Vorteilhafterweise kann eine streifenartige Leiterbahn als Kondensatorpol für das Wechselfeld zwischen zwei streifenartigen Leiterbahnen mit Bezugspotential angeordnet sein. Die einzelnen Leiterbahnen zusammen bilden dann die Sensorfläche.

Die Sensorflächen können je nach Art des Materials der Wandung in die Wandung integriert oder auf der Wandung angeordnet sein. Ist die Wandung beispielsweise aus Kunststoff, so können die Sensorflächen in die Wand integriert sein und mit einer weiteren leitfähigen Fläche mit Bezugspotential auf der Außenseite des Behälters gegen äußere Einflüsse abgeschirmt sein. Bei einer Wandung aus einem metallischen Werkstoff stellt diese die Abschirmung und das Bezugspotential darf. Einzelne Leiterbahnen mit einem vorteilhaften Abstand der Wandung und elektrisch isoliert bilden den Kodensatorpol für das Wechselfeld.

Bei einer weiteren, vorteilhaften Ausgestaltung der Erfindung ist wenigstens eine weitere Sensorfläche, die entsprechend den anderen Sensorflächen ausgebildet sein kann, zur Überwachung der Veränderung der Beschaffenheit der Flüssigkeit vorgesehen. Eine Veränderung der Beschaffenheit der Flüssigkeit und ein damit einhergehende Änderung ihrer dielektronischen Eigenschaften kann beispielsweise dann auftreten, wenn die Flüssigkeit altert, verunreinigt und/oder mit einer anderen Flüssigkeit vermischt wird. Für den Fall, dass die Flüssigkeit beispielsweise Kraftstoff eines Fahrzeuges ist, kann erkannt werden, falls ein anderer, nicht geeigneter Kraftstoff getankt wird. Die Beschaffenheit der Flüssigkeit im Behälter verändert sich dann. Ist die Flüssigkeit beispielsweise Öl für einen Motor, so kann eine Veränderung des Öls, beispielweise bei Verunreinigung des Öls durch Benzin oder Wasser, durch die weitere Sensorfläche erkannt werden.

Ferner kann erfindungsgemäß vorgesehen sein, dass ein mit der Auswerteeinheit elektrisch verbundener Temperatursensor zur Bestimmung der Temperatur der Flüssigkeit vorgesehen ist. Je nach Art der Flüssigkeit kann die Temperatur der Flüssigkeit die Messsignale der Sensorflächen beeinflussen. Über das Vorsehen eines Temperatursensors kann die Temperaturabhängigkeit der Messung korrigiert werden.

Vorteilhaft ist, wenn die weitere Sensorfläche zur Überwachung der Veränderung der Beschaffenheit der Flüssigkeit und/oder der Temperatursensor am oder im Bodenbereich des Behälters vorgesehen ist. Dabei kann hierfür die tiefste Stelle des Behälters gewählt werden, da dann gewährleistet wird, dass die weitere Sensorfläche und/oder der Temperatursensor bei vorhandener Flüssigkeit ein von den dielektrischen Eigenschaften der Flüssigkeit abhängiges Messsignal liefert.

Bei einer weiteren, vorteilhaften Ausgestaltung der Erfindung ist die Wandung aus einem Kunststoffmaterial und die Sensorflächen und/oder die die Sensorflächen mit der Auswerteeinheit verbindenden elektrischen Leitungen und/oder die Auswerteeinheit wenigstens teilweise in das Kunststoffmaterial eingebettet, eingegossen oder integriert. Für den Fall, dass die Wandung ein Spritzgussteil ist, können die Sensorflächen, die elektrischen Leitungen und/oder die Auswerteeinheit von der Wandung umspritzt werden.

Ferner ist erfindungsgemäß denkbar, dass ein Träger vorgesehen ist, an dem oder in dem die Sensorflächen und/oder die elektrischen Leitungen und/oder die Auswerteeinheit angeordnet sind. Ein derartiger Träger ist insbesondere dann vorteilhaft, wenn die Wandung aus einem metallischen Material besteht. Der Träger ist dabei vorteilhafterweise derart ausgebildet, dass er wenigstens weitgehend formschlüssig in den Behälter eingefügt werden kann. Dabei ist denkbar, dass der Träger ein Dichtelement zur Abdichtung einer oberen Kante der Wandung gegen einen Deckel oder ein anderes Bauteil umfasst. Der Träger übernimmt damit folglich zudem eine Dichtfunktion, wodurch ein separates Dichtelement entfällt.

Die eingangs genannte Aufgabe wird auch durch einen Flüssigkeitsbehälter gelöst, der ein erfindungsgemäßes Messsystem umfasst. Als Flüssigkeitsbehälter kommen insbesondere sämtliche an einer beweglichen Maschine oder an einem Fahrzeug, insbesondere einem Kraftfahrzeug, vorzusehende Flüssigkeitsbehälter in Betracht. Beispiele hierfür sind: Ölwanne, Kraftstofftank, Kühlmittelausgleichsbehälter oder Waschwasserbehälter. Sämtliche Behälter können, wie eingangs erwähnt, aus Kunststoff sein, wobei dann die Sensorflächen, die elektrischen Leitungen und/oder die Auswerteeinheit wenigstens teilweise in oder an den Kunststoffbehälter ein- oder angeformt sein können.

Weitere Einzelheiten und vorteilhafte Ausgestaltungen der Erfindung sind der nachfolgenden Beschreibung zu entnehmen, in der die Erfindung anhand der in der Zeichnung dargestellten Ausführungsbeispiele näher beschrieben und erläutert ist.

Es zeigen:
- Figur 1: eine schematische Darstellung eines erfindungsgemäßen Messsystems mit einem erfindungsgemäßen Behälter;
- Figur 2: eine zweite Ausführungsform eines erfindungsgemäßen Messsystems mit einem erfindungsgemäßen Behälter;
- Figur 3: einen das Messsystem gemäß Figur 2 tragenden Träger in Einzelteilansicht;
- Figur 4: einen Teilausschnitt einer Draufsicht auf Figur 2;
- Figur 5: eine Detailvergrößerung aus Figur 2;
- Figur 6: eine dritte Ausführungsform der Erfindung ; und
- Figur 7: eine Detailvergrößerung aus Figur 6.

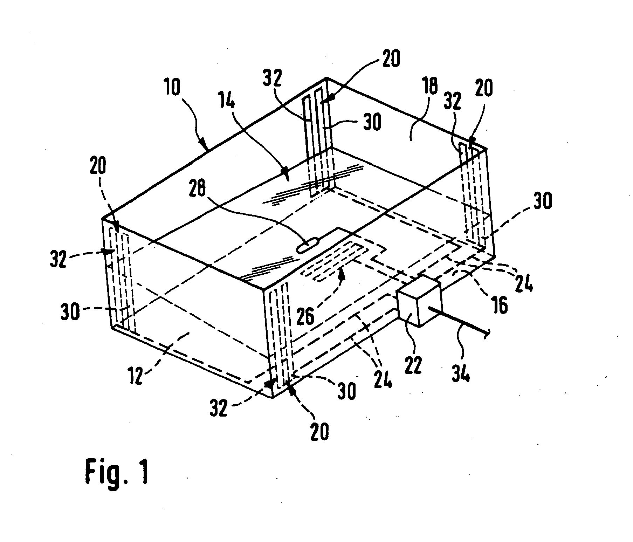

In der Figur 1 ist ein Behälter 10 dargestellt, in dem sich eine Flüssigkeit 12 befindet, deren angedeutete Oberfläche mit dem Bezugszeichen 14 gekennzeichnet ist. Der Behälter 10 weist einen Boden 16 auf sowie eine um den Boden umlaufende Wandung 18. In den vertikal verlaufenden Eckbereichen des Behälters 10 ist jeweils eine sich vom Boden 16 nach oben erstreckende Sensorfläche 20 vorgesehen, mit der der Flüssigkeitsstand der Flüssigkeit 12 an den Sensorflächen 20 gemessen werden kann. Wie aus der Figur 1 deutlich wird, erstrecken sich die Sensorflächen vom Boden 16 in weitgehend senkrechter Richtung nach oben.

Die Oberfläche 14 der Flüssigkeit 12 ist dabei aufgrund einer Schräglage des Behälters 10 nicht parallel zum Boden 16. Eine Schräglage des Behälters kann beispielsweise aus einer dynamischen Bewegung oder aus einem auf die Flüssigkeit wirkenden Beschleunigungsfeld resultieren, insbesondere wenn der Behälter in einem Fahrzeug angeordnet ist, das sich nicht in einer horizontalen Lage, beispielsweise durch Schrägfahrten, Tal- oder Bergfahrten oder Kurvenfahrten, befindet.

Aufgrund der Schräglage des Behälters ergeben sich an den mindestens drei Sensorflächen 20 mindestens drei verschiedene lokale Flüssigkeitsstände. Die Sensorflächen 20 sind mit einer Auswerteeinheit 22 über Leitungen 24 elektrisch verbunden. Die Auswerteeinheit 22 wertet die Messsignale der Sensorflächen 20 aus und bestimmt aus den einzelnen Messsignalen einen gemittelten Füllstand des Behälters.

Am Boden 16 ist eine weitere Sensorfläche 26 vorgesehen, die den Sensorflächen 20 im Aufbau entspricht. Die Sensorfläche 26 dient zur Überwachung der Veränderung der Beschaffenheit der Flüssigkeit. Auch die Sensorfläche 26 ist mit der Auswerteeinheit 22 elektrisch verbunden. Ferner ist am Boden 16 ein Temperatursensor 28 vorgesehen, mit dem die Temperatur der Flüssigkeit 12 bestimmt werden kann. Bei der Auswertung der Messsignale kann die Auswerteeinheit 22 dadurch die Flüssigkeitstemperatur berücksichtigen.

Die Sensorflächen 20 und 26 können dabei insbesondere als Streufeldkondensatoren ausgebildet sein, wobei jede Sensorfläche dann wenigstens zwei voneinander beabstandet, nebeneinander angeordnet und streifenartig ausgebildete Leiterbahnen als Kondensatorpole 30 und 32 vorsieht. Die Kondensatorpole 32 können dabei ein Bezugspotential vorsehen. Die Kondensatorpole 30 können dabei von der Auswerteeinheit 22 mit einer Wechselspannung einem entsprechenden höheren Potential beaufschlagt werden. Je nach Flüssigkeitsstand am jeweiligen Streufeldkondensator ändert sich die Kapazität des Kondensators, wodurch auf den jeweiligen Flüssigkeitsstand am jeweiligen Streufeldkondensator rückgeschlossen werden kann. Entsprechend ändert sich die Kapazität der ebenfalls als Streufeldkondensator ausgebildeten weiteren Sensorfläche 26 bei einer qualitativen Veränderung der Flüssigkeit 12.

Die Auswerteeinheit 22 kann so ausgebildet sein, dass sie digitale Ausgangswerte über eine elektrische Leitung 34 an eine übergeordnete Steuereinheit abgibt.

Der in der Figur 1 dargestellte Behälter mit dem beschriebenen Messsystem hat den Vorteil, dass keine beweglichen Bauteile, wie beispielweise Schwimmer, zur Bestimmung des Füllstandes des Behälters 10 vorzusehen sind. Ferner kann durch geeignete Mittelung der Flüssigkeitsstände an den einzelnen Sensorflächen der exakte Füllstand des Behälters 10 bestimmt werden. Ferner kann aufgrund der weiteren Sensorfläche 26 der Zustand der Flüssigkeit 12 bestimmt werden. Über den Temperatursensor 28 kann eine Abhängigkeit der Flüssigkeitstemperatur von den Messergebnissen berücksichtigt werden.

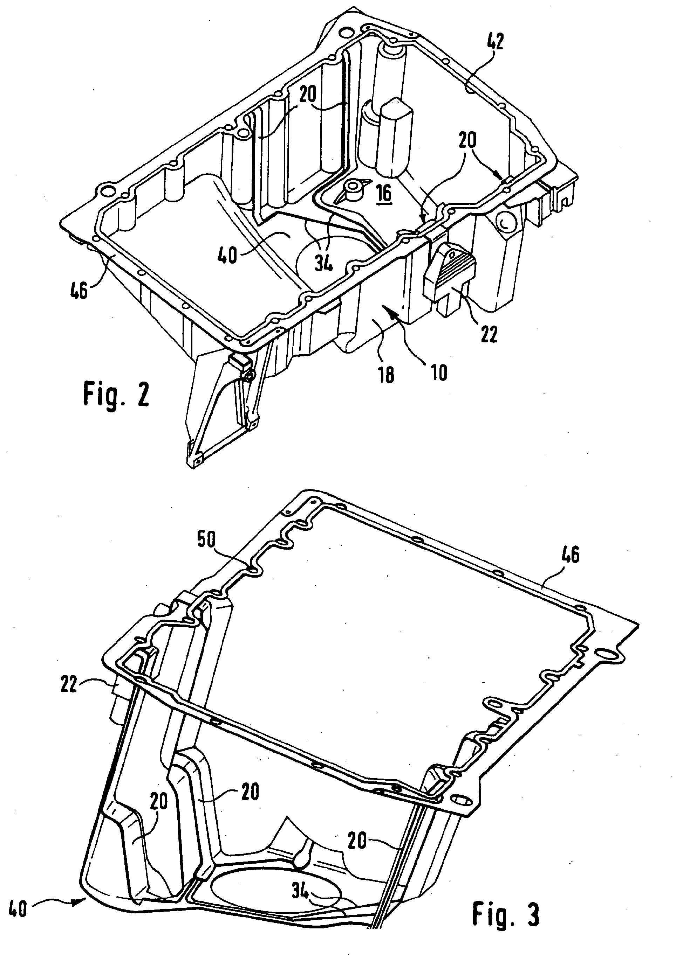

Bei der in den Figuren 2 bis 5 dargestellten zweiten Ausführungsform der Erfindung sind der Figur 1 entsprechende Bauteile mit entsprechenden Bezugszeichen gekennzeichnet.

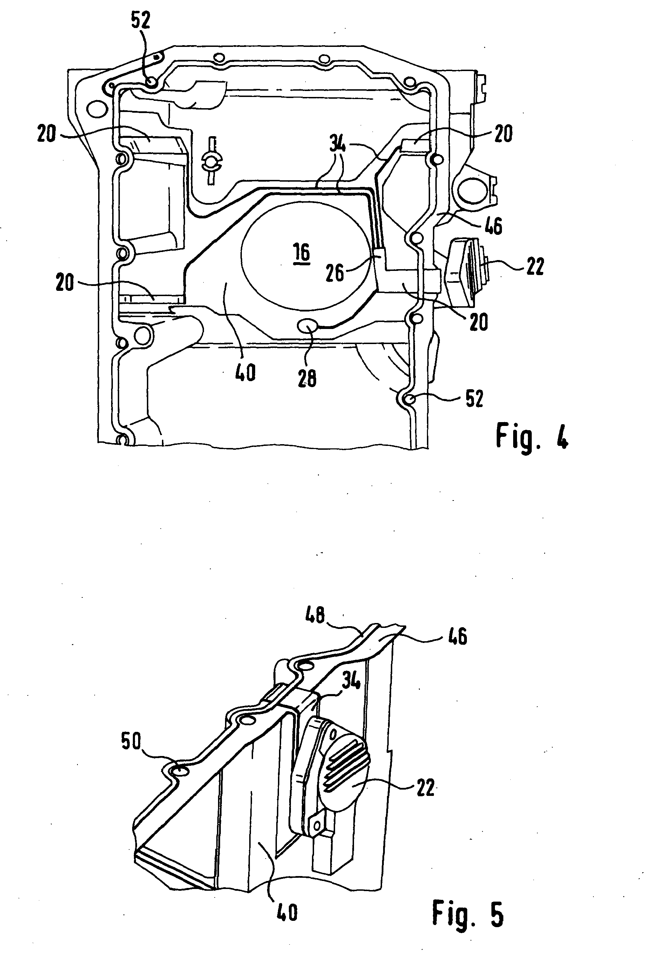

In der Figur 2 ist ein Behältnis 10 in Form einer Ölwanne eines Kraftfahrzeuges dargestellt. In die Ölwanne 10 kann ein Träger 40 eingesetzt werden, der in der Figur 3 deutlich zu erkennen ist. Am Träger 40 sind insgesamt vier Sensorflächen 20 vorgesehen, die in der Draufsicht in Figur 4 deutlich zu sehen sind. Die Sensorflächen 20 erstrecken sich dabei von der Oberkante 42 des Behälters 10 bis zu dessen Boden 16. Die Sensorflächen 20 können dabei als Streufeldkondensatoren ausgebildet sein, wie in Figur 1 beschrieben. Am Träger sind ferner elektrische Leitungen 44 vorgesehen, die die Sensorflächen 20 mit der Auswerteeinheit 22 elektrisch verbinden. In Figur 5 ist die Auswerteeinheit 22 in vergrößerter Darstellung gezeigt.

Der Träger 40, die Sensorflächen 20 und die elektrischen Leitungen 34 sind dabei derart ausgebildet, dass sie weitgehend formschlüssig in die Ölwanne 10 eingesetzt werden können.

Am Träger 40, der vorteilhafterweise aus Kunststoff ausgebildet sein kann, ist ein umlaufendes Dichtelement 46 zur Auflage auf die Oberkante 42 des Behälters 10 vorgesehen. Das Dichtelement 46 weist zudem eine Dichtspur 48 auf (vergleiche insbesondere Figur 5), die beispielsweise aus Silikon oder einem ähnlichen Werkstoff sein kann. Das Dichtelement 46 weist Zentrieraussparungen 50 auf, die in komplementäre, an der oberen Kante 42 vorgesehene Zentriererhebungen eingesetzt werden können. Damit kann ein positionsgenaues Anordnen des Dichtelements 46 beziehungsweise des Trägers 40 im Behälter 10 erfolgen.

Am Boden des Trägers 40 sind, wie insbesondere in Figur 4 zu erkennen ist, die weitere Sensorfläche 26 und der Temperatursensor 28 angeordnet, die jeweils ebenfalls über elektrische Leitungen mit der Auswerteeinheit 22 verbunden sind. Mit der weiteren Sensorfläche 26 kann eine Wasser- und/oder Kraftstoffgehaltsmessung des sich im Behälter 10 befindlichen Öls durchgeführt werden.

Die Sensorflächen 20, die Leitungen 34 und die Sensoren 26, 28 können dabei auf den Träger aufgebracht oder in den Träger integriert sein. Als Sensorflächen 20, 26 kommen insbesondere Streufeldkondensatoren in Betracht, die von flexiblen, streifenartigen Leiterbahnen gebildet sind.

Aufgrund der lokalen Messung der Flüssigkeitsstände an den Sensorflächen 20 kann die Auswerteeinheit 22 den Füllstand des Behälters 10 unabhängig von der räumlichen Lage des Behälters 10 zuverlässig bestimmen.

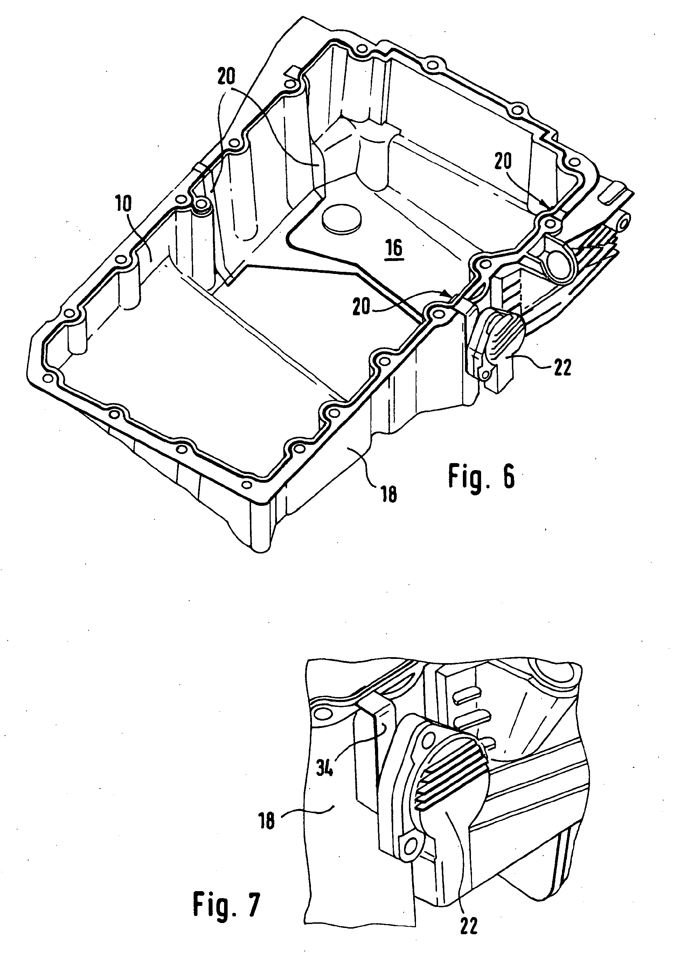

Die Ausführungsform gemäß Figuren 6 und 7 unterscheidet sich von der Ausführungsform gemäß den Figuren 2 bis 5 dadurch, dass die Sensorflächen 20 in den Behälter 10 integriert sind. Der Behälter 10 kann hierbei insbesondere aus einem Kunststoffmaterial sein, wobei dann die Sensorflächen 20, 26 unmittelbar auf das Material des Behälters aufgebracht oder in dieses integriert sind. Insbesondere können die Sensorflächen bei Spritzgussteilen vom Material des Behälters umspritzt sein. Bei einer derartigen Ausführungsform kann auch die Auswerteeinheit 23 am Behälter angeordnet sein. Auch hier können die Sensorflächen aus flexiblen Leiterbahnen gebildet sein.

Die Erfindung beschränkt sich nicht auf die in den Ausführungsbeispielen gezeigten Behältnissen; sie umfasst sämtliche denkbare Fahrzeugflüssigkeitsbehälter, insbesondere Ölwannen, Kraftstofftanks, Ölmittelausgleichsbehälter oder Waschwasserbehälter.

## Patentansprüche

1. Messsystem zur Messung des Füllstandes eines mit einer Flüssigkeit (12) befüllbaren Behälters (10), wobei der Behälter einen Boden (16) und eine um den Boden (16) umlaufende Wandung (18) aufweist, **dadurch gekennzeichnet, dass** mehrere zur Anordnung an die Wandung (18) und sich dort vom Boden (16) oder von Bodennähe nach oben erstreckende Sensorflächen (20) zur Messung des lokalen Flüssigkeitsstandes an der jeweiligen Sensorfläche (20) vorgesehen sind und dass eine Auswerteeinheit (22) zur Auswertung der Messsignale der einzelnen Sensorflächen (20) und zur Bestimmung des Füllstandes des Behälters (10) aus den Messsignalen der einzelnen Sensorflächen (20) vorgesehen ist.

2. Messsystem nach Anspruch 1, **dadurch gekennzeichnet, dass** die Auswerteeinheit (22) derart ausgebildet ist, dass sie den Füllstand durch Mittelung der Messsignale bestimmt wird.

3. Messsystem nach Anspruch 1 oder 2, **dadurch gekennzeichnet, dass** die Sensorflächen (20) folienartig ausgebildet und an die Geometrie der Wandung (18) angepasst oder anpassbar sind.

4. Messsystem nach Anspruch 1, 2 oder 3, **dadurch gekennzeichnet, dass** die Sensorflächen (20) als Streufeldkondensatoren ausgebildet sind.

5. Messsystem nach Anspruch 4, **dadurch gekennzeichnet, dass** die Kondensatorpole (30, 32) der Streufeldkondensatoren aus flexiblen, nebeneinander angeordneten und/oder streifartigen Leiterbahnen gebildet sind.

6. Messsystem nach Anspruch 5, **dadurch gekennzeichnet, dass** pro Sensorfläche (20) ein Kondensatorpol (30) für das Wechselfeld und wenigsten ein weiterer Kondensatorpol (32) mit Bezugspotential vorgesehen ist.

7. Messsystem nach einem der vorhergehenden Ansprüche, **dadurch gekennzeichnet, dass** die Sensorflächen (20) in die Wandung (18) integriert oder auf der Wandung (18) angeordnet sind.

8. Messsystem nach einem der vorhergehenden Ansprüche, **dadurch gekennzeichnet, dass** wenigstens eine weitere Sensorfläche (26) zur Überwachung der Veränderung der Beschaffenheit der Flüssigkeit vorgesehen ist.

9. Messsystem nach einem der vorhergehenden Ansprüche, dass ein mit der Auswerteeinheit (22) elektrisch verbundener Temperatursensor (28) zur Bestimmung der Temperatur der Flüssigkeit vorgesehen ist.

10. Messsystem nach Anspruch 9 oder 10, **dadurch gekennzeichnet, dass** die weitere Sensorfläche (26) und/oder der Temperatursensor (28) am oder im Bodenbereich des Behälters (10) vorgesehen ist.

11. Messsystem nach einem der vorhergehenden Ansprüche, **dadurch gekennzeichnet, dass** die Wandung (18) aus einem Kunststoffmaterial ist und dass die Sensorflächen (20) und/oder die die Sensorflächen mit der Auswerteeinheit verbindenden elektrischen Leitungen (34) und/oder die Auswerteeinheit (22) wenigstens teilweise in das Kunststoffmaterial eingebettet, eingegossen oder integriert ist.

12. Messsystem nach einem der vorhergehenden Ansprüche, **dadurch gekennzeichnet, dass** die Sensorflächen (20) und/oder die die Sensorflächen mit der Auswerteeinheit verbindenden elektrischen Leitungen (34) und/oder die Auswerteeinheit (22) an oder in einem Träger (40) angeordnet sind, der in den Behälter einsetzbar ist.

13. Messsystem nach Anspruch 13, **dadurch gekennzeichnet, dass** der Träger (40) ein Dichtelement (46, 48) zur Abdichtung einer oberen Kante (42) der Wandung (18) gegen einen Deckel oder ein anderes Bauteil umfasst.

14. Fahrzeugflüssigkeitsbehälter (10), insbesondere Ölwanne, Kraftstofftank, Kühlmittelausgleichsbehälter oder Waschwasserbehälter, umfassend ein Messsystem nach einem der vorhergehenden Ansprüche.
